# EUROPEAN PATENT APPLICATION

(11) **EP 2 039 536 A1**
(43) Date of publication of application: **25.03.2009**
(21) Application number: 07116659.9
(22) Date of filing: 18.09.2007
(51) Int. Cl.: B60C 19/00

(54) **Method, apparatus and system for processing of vehicle tyres**

(71) Applicant: Carnehammar, Lars Bertil, 12145 Johanneshov (SE)
(72) Inventor: Seitz, Norbert, 82194 Gröbenzell (DE)
(74) Representative: Plougmann & Vingtoft A/S

(57) **Abstract**

A method of processing a vehicle tyre and a thixotropic balancing substance, comprising providing a first amount of the balancing substance to a first circumferential balancing area on an inner side of the vehicle tyre comprising distributing the first amount of the balancing substance on the first balancing area substantially uniformly; and a corresponding apparatus and system.

## Description

### Field of the Invention

Embodiments of the invention described herein relate generally to processing of vehicle wheels, and more particularly to a method, an apparatus and a system for processing of vehicle tyres, for example pneumatic tyres, and a thixotropic balancing substance.

### Background of the Invention

EP patent application 0 281 252 and corresponding US patent 4,867,792 disclose a thixotropic tyre balancing composition having a yield stress value between 30 Pa and 260 Pa being capable of balancing tyres by being able to flow under the influence of the vibrations induced when a heavy spot on the tyre hits the road surface. The balancing composition distributes itself in a wheel assembly consisting of a tyre mounted on a rim and having a heavy spot.

DE patent application 3823926 discloses a method and an apparatus for the analysis of production-dependent, circumferentially distributed non-uniformities of a vehicle tyre, wherein a predetermined non-uniformity is analysed by successively mounting a plurality of tyres on the measuring rim in each case with the point having the non-uniformities to be analysed in the same respective angular rotation position, storing the magnitudes of the non-uniformities of each tyre measured around its circumference and adding them up. The method is suitable, inter alia, for the quality control of motor vehicle tyres.

US patent 5,431,726 discloses a tyre gel balancing composition having a Storage modulus of between 3000 and 15000 Pa and a Specific Gravity less than 1000 kg/m³ in the temperature range between -20 °C and +90 °C and being capable of balancing tyres by being able to flow under the vibrations caused by imbalance in a wheel assembly.

PCT patent application WO 98/52009 and corresponding DE patent application 197 19 886 disclose a method for balancing automobile wheel assemblies comprising pneumatic tyres, comprising introducing a viscous balancing composition into the tyre; mounting the wheel on a rotatable assembly; pressing a rotatable drum and the tread surface of the wheel in the rotatable assembly against one another with a static force F, the axes of rotation of the drum and the wheel assembly being essentially parallel; and driving the drum and/or the wheel assembly to rotation for a time period T; the force F and the time T being sufficient to cause the balancing composition to be distributed inside the tyre, thereby balancing the wheel assembly. The method may preferably be carried out on an apparatus comprising a rotatable assembly on which a wheel assembly comprising a rim and a pneumatic tyre may be mounted; a rotatably mounted drum having an axis of rotation essentially parallel to that of the rotatable wheel assembly, the axes drum and/or the rotatable wheel assembly being capable of being moved in a direction towards and away from one another; driving means for rotating the rotatable wheel assembly and/or the drum; spring means and dampening means for providing static force and dampening in a direction between the axes of rotation of the drum and the rotatable wheel assembly, respectively, and essentially at right angles to said axes; and spring means and/or dampening means mounted between the axis of rotation of the rotatable wheel assembly and the ground and/or between the axis of rotation of the drum and the ground.

DE patent application 198 57 646 discloses a method for balancing tyres by introducing a balancing substance inside the tyre, comprising placing a substance with definite properties, shape, geometry and weight inside the tyre; and moving to the point of imbalance by rotating the tyre. The method may also be used for balancing other rotating objects.

DE patent application 198 53 691 discloses a method for introducing tyrebalancing substance as internal circumferential gel bead. The substance characteristic, shape, weight, geometry and its deposition locations are defined. The internal surface of the tyre exhibits defined shape and geometry. One or more endless strands may be employed. Strand cross section may be circular, semicircular, flattened, triangular, quadrilateral or polygonal. The one or more strands are distributed over the entire circumference, or just part of it, or both types of distribution take place. Strand portions are applied opposite the valve, when mounted on the rim. They are applied at or away from the equatorial plane, symmetrically, or else asymmetrically. The substance is injected through the valve in set quantity. A gel with a defined viscosity, thixotropy, long term stability, and compatibility with the tyre's inner surface is used. The tyre has one or more circumferential grooves, optionally between beads, to accept the substance.

DE patent application 199 16 564 discloses a method and an apparatus for distributing weights in tyres, involving applying weight material to the inner liners of tyres. Tyre inhomogeneity is measured on a conventional machine before the tyre is on the rim and the measurement values are fed to a computer, which determines the quantity of weight material to be applied and where to apply it to compensate the inhomogeneity and which is coupled to a machine for applying weight material to the required place in the required quantity.

A viscous, for example thixotropic, balancing substance, for example composition, may be used for balancing a vehicle wheel comprising a tyre. The balancing substance may be inserted into the tyre before the tyre is mounted to a rim, or through a valve. For balancing the vehicle wheel, the substance may be distributed by driving a vehicle comprising the vehicle wheel, or mounting the vehicle wheel on a rotatable assembly; pressing a rotatable drum and a tread surface of the vehicle wheel in the rotatable assembly against one another with a static force; and driving the drum and/or the vehicle wheel to rotation for a time period; the force and the time being sufficient to cause the balancing composition to be distributed inside the tyre, thereby balancing the vehicle wheel.

If the tyre is according to its specification and, thus, does not have a significant geometrical abnormality, such as axial run-out or radial run-out, or significant variations in axial, radial or tangential stiffness, the balanced vehicle wheel provides, from a subjective view, for a comfortable driving experience.

However, vehicle manufactures and also repair shops need a method, an apparatus and a system for efficiently, and preferably predominantly automatically, processing of vehicle tyres and a thixotropic balancing substance.

Conventional methods, apparatuses and systems for processing of vehicle wheels cannot be used for efficiently processing vehicle tyres and a thixotropic balancing substance.

For these and other reasons, there is a need for the invention as set forth in the following in the embodiments.

### Summary of the Invention

The invention aims to provide a method, an apparatus and a system for processing of vehicle tyres and a thixotropic balancing substance.

An aspect of the invention is a method of processing a vehicle tyre 20; 30; 40; 60 and a thixotropic balancing substance, comprising providing a first amount of the balancing substance 251; 351; 451; 651 to a first circumferential balancing area 250; 350; 450; 650 on an inner side 240; 340; 440; 640 of the vehicle tyre 20; 30; 40; 60, comprising distributing the first amount of the balancing substance on the first balancing area 250; 350; 450; 650 substantially uniformly.

Another aspect of the invention is an apparatus for processing a vehicle tyre 20; 30; 40; 60 according to the method.

A further aspect of the invention is a system for processing a vehicle tyre 20; 30; 40; 60 according to the method.

### Brief Description of the Several Views of the Drawing(s)

While the specification concludes with claims particularly pointing out and distinctly claiming that which is regarded as the invention, a more particular description of the invention will be rendered by reference to specific embodiments thereof, which are depicted in the appended drawings, in order to illustrate the manner in which embodiments of the invention are obtained. Understanding that these drawings depict only typical embodiments of the invention, that are not necessarily drawn to scale, and, therefore, are not to be considered limiting of its scope, embodiments will be described and explained with additional specificity and detail through use of the accompanying drawings in which:
Fig. 1 shows a cross-sectional view of a vehicle tyre 10;
Fig. 2 shows cross-sectional views of vehicle tyres 20 according to an embodiment of the invention;
Fig. 3 shows cross-sectional views of vehicle tyres 30 according to another embodiment of the invention;
Fig. 4 shows cross-sectional views of vehicle tyres 40 according to another embodiment of the invention;
Fig. 5 shows various methods of mounting a vehicle tyre 50 according to an embodiment of the invention; and
Fig. 6 shows a method of processing a vehicle tyre 60 and a thixotropic balancing substance according to an embodiment of the invention.

### Detailed Description of the Invention

In the following detailed description of the embodiments, reference is made to the accompanying drawings which form a part hereof and show, by way of illustration, specific embodiments in which the invention may be practiced. In the drawings, like numerals describe substantially similar components throughout the several views. The embodiments are intended to describe aspects of the invention in sufficient detail to enable those of skill in the art to practice the invention. Other embodiments may be utilized and structural, logical or electrical changes or combinations thereof may be made without departing from the scope of the invention. Moreover, it is to be understood, that the various embodiments of the invention, although different, are not necessarily mutually exclusive. For example, a particular feature, structure or characteristic described in one embodiment may be included within other embodiments. Furthermore, it is to be understood, that embodiments of the invention may be implemented using different technologies. Also, the term "exemplary" is merely meant as an example, rather than the best or optimal. The following detailed description is, therefore, not to be taken in a limiting sense, and the scope of the invention is defined only by the appended claims, along with the full scope of equivalents to which such claims are entitled.

Reference will be made to the drawings. In order to show the structures of the embodiments most clearly, the drawings included herein are diagrammatic representations of inventive articles. Thus, actual appearance of the fabricated structures may appear different while still incorporating essential structures of embodiments. Moreover, the drawings show only the structures necessary to understand the embodiments. Additional structures known in the art have not been included to maintain clarity of the drawings. It is also to be understood, that features and/or elements depicted herein are illustrated with particular dimensions relative to one another for purposes of simplicity and ease of understanding, and that actual dimensions may differ substantially from that illustrated herein.

In the following description and claims, the terms "include", "have", "with" or other variants thereof may be used. It is to be understood, that such terms are intended to be inclusive in a manner similar to the term "comprise".

In the following description and claims, the terms "coupled" and "connected", along with derivatives such as "communicatively coupled" may be used. It is to be understood, that these terms are not intended as synonyms for each other. Rather, in particular embodiments, "connected" may be used to indicate, that two or more elements are in direct physical or electrical contact with each other. However, "coupled" may also mean that two or more elements are not in direct contact with each other, but yet still co-operate or interact with each other.

In the following description and claims, terms, such as "upper", "lower", "first", "second", etc., may be only used for descriptive purposes and are not to be construed as limiting. The embodiments of a device or article described herein can be manufactured, used, or shipped in a number of positions and orientations.

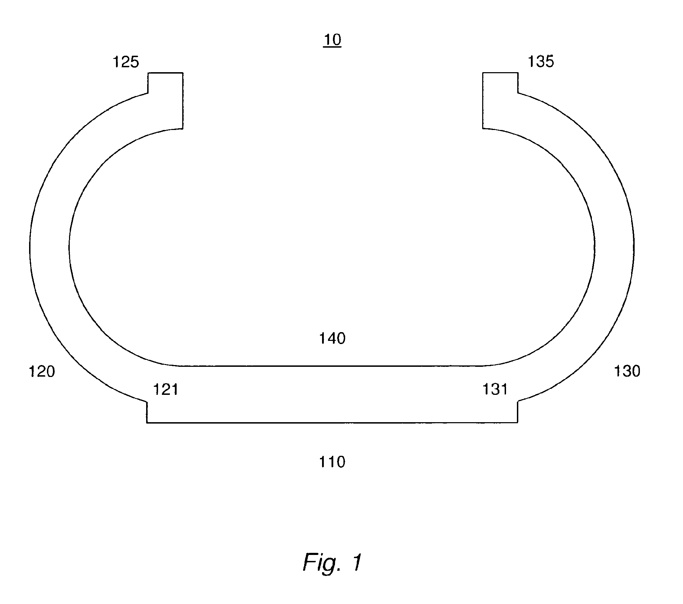

Fig. 1 shows a cross-sectional view of a vehicle tyre 10. The vehicle tyre 10 comprises a circumferential tread surface 110 defining a tread face on an outer surface, a first sidewall portion 120 with a first shoulder portion 121 and a first bead portion 125, a second sidewall portion 130 with a second shoulder portion 131 and a second bead portion 135 axially spaced from the first bead portion 125 to form a toroidal shape and an annular hollow. The tyre 10 may be a pneumatic tyre and comprise a pressurized gas or mixture of gases, for example atmospheric air (not shown). The vehicle tyre 10 may be intended for a motorized vehicle, for example a car, bus, light truck, heavy truck or motorcycle, or an aircraft.

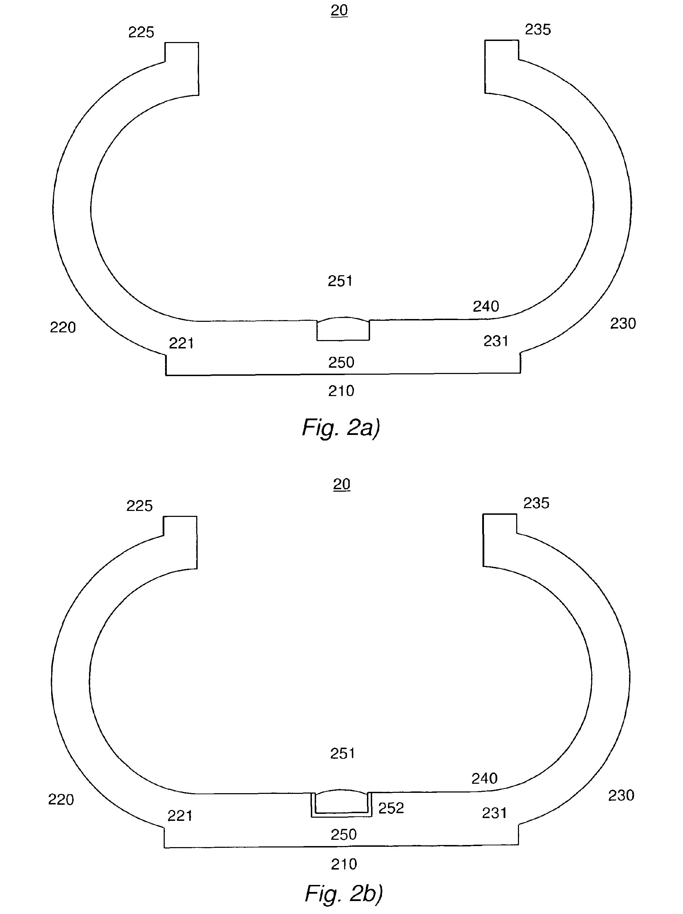

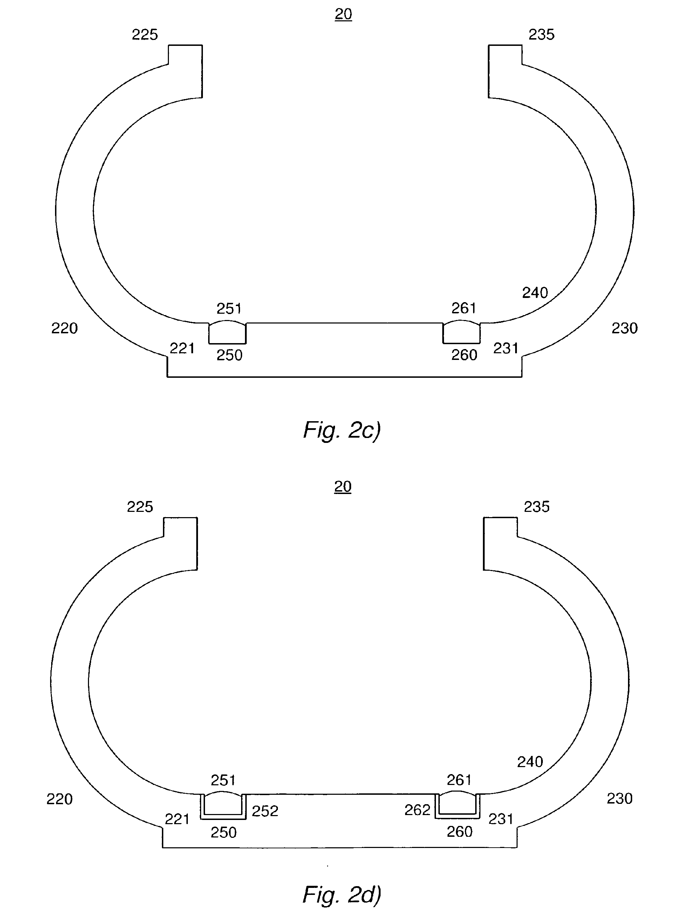

Fig. 2 shows, with reference to Fig. 1, cross-sectional views of vehicle tyres 20 according to an embodiment of the invention.

Fig. 2 a) shows a cross-sectional view of vehicle tyre 20 further comprising a first circumferential balancing area 250 on the inner side 240, for example an inner liner of the tyre 20. The first balancing area 250 may be arranged between the first shoulder portion 221 and the second shoulder portion 231, preferably in a centre area. The first balancing area 250 may be formed as a groove. The groove may be formed during production of the tyre 20 or later, for example during processing of the tyre 20 according to an embodiment of the invention. The balancing area 250 comprises a first amount of the balancing substance 251. The balancing substance may be a thixotropic balancing substance, such as a thixotropic gel. The first amount of the balancing substance 251 is distributed on the first balancing area (250; 350; 450; 650) during processing of the tyre 20 according to an embodiment of the invention. The first amount of the balancing substance 251 is preferably distributed substantially uniformly. The first amount of the balancing substance 251 may be provided as a first strand of balancing substance. Alternatively, the first amount of the balancing substance 251 may be provided as a first strand of balancing substance and a second strand of balancing substance. Furthermore, the first strand of balancing substance may be provided intermittent with the second strand of balancing substance, such that process time for distributing the first amount of balancing substance 251 may be reduced. A cross section of the first strand of balancing substance or the second strand of balancing substance or both is circular, semicircular, flattened, triangular, quadrilateral, polygonal or the like.

Fig. 2 b) shows a cross-sectional view of vehicle tyre 20 wherein a surface of the first balancing area 250 comprises a first nanostructure 252. The first nanostructure 252 increases movability of the first amount of the balancing substance 251 on the first balancing area 250 for balancing the tyre 20 and a rim forming a vehicle wheel. The first nanostructure 252 may be formed during production of the tyre 20 or later, for example during processing of the tyre 20 according to an embodiment of the invention. If the first nanostructure 252 is formed during production of the tyre 20, it may be formed by a bladder forming the hollow of the tyre 20. Alternatively, the first nanostructure 252 may be provided by distributing, for example spraying and drying or hardening, a material, such as a varnish, comprising nanoparticles on the first balancing area 250.

Fig. 2 c) shows a cross-sectional view of vehicle tyre 20 wherein the first balancing area 250 is arranged between the first shoulder portion 221 and the second shoulder portion 231, closer, preferably next, to the first shoulder portion 221. The tyre 20 further comprises a second balancing area 260 comprising a second amount of the balancing substance 261. The second balancing area 260 is arranged between the first shoulder portion 221 and the second shoulder portion 231, closer, preferably next, to the second shoulder portion 231. The second balancing area 260 may be processed similarly or identically to, and preferably simultaneously with, the first balancing area 250.

Fig. 2 d) shows a cross-sectional view of vehicle tyre 20 wherein the first balancing area 250 comprising the first nanostructure 252 is arranged between the first shoulder portion 221 and the second shoulder portion 231, closer, preferably next, to the first shoulder portion 221, and the second balancing area 260 comprising a second nanostructure 262 is arranged between the first shoulder portion 221 and the second shoulder portion 231, closer, preferably next, to the second shoulder portion 231.

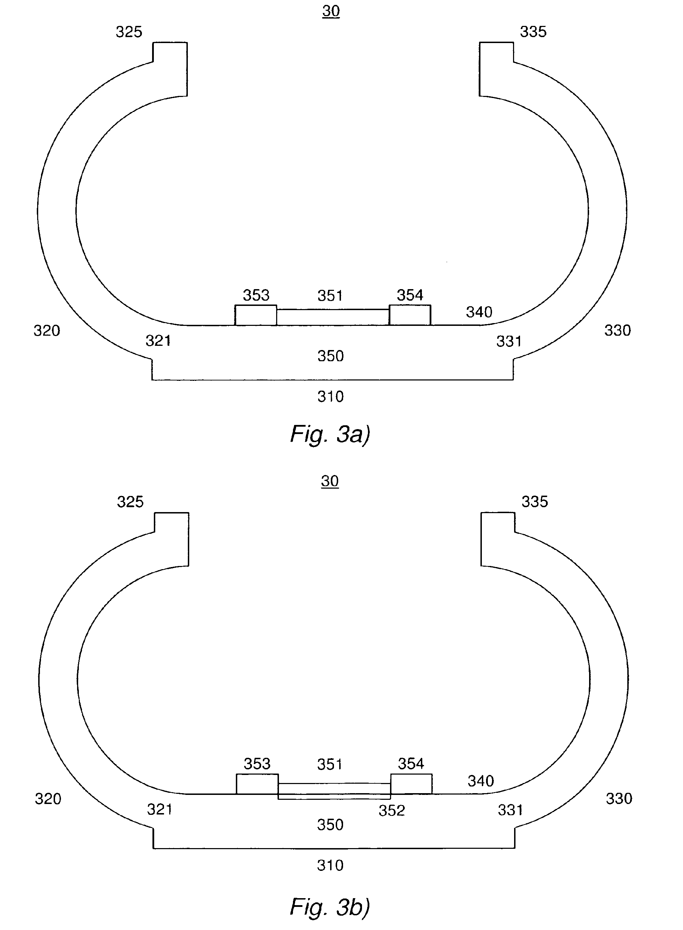

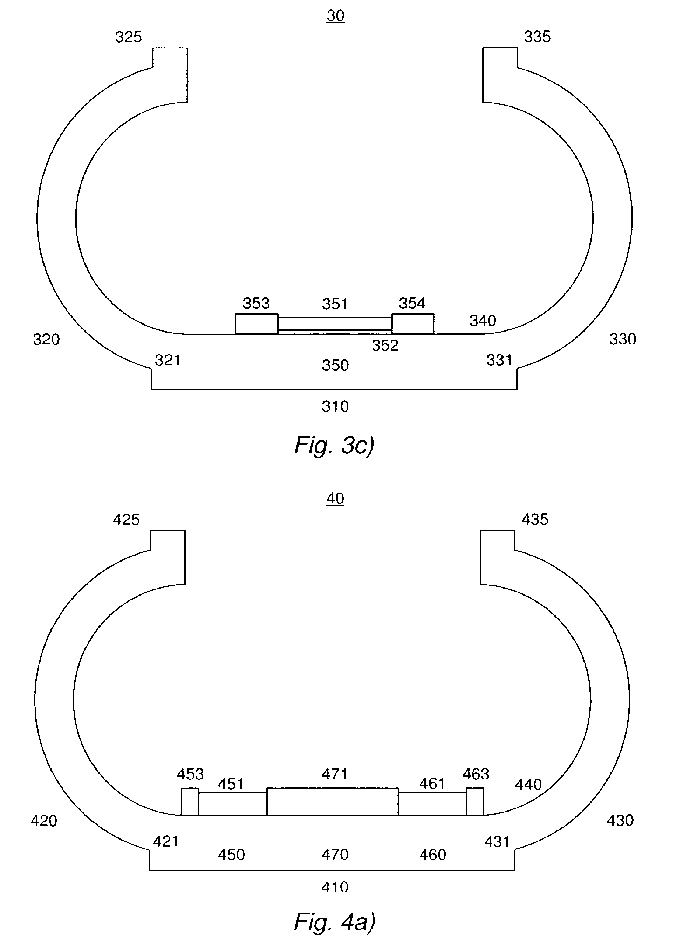

Fig. 3 shows, with reference to Figs 1 and 2, cross-sectional views of vehicle tyres 30 according to another embodiment of the invention.

Fig. 3 a) shows a cross-sectional view of vehicle tyre 30 comprising the first circumferential balancing area 350 comprising a first amount of the balancing substance 351 on the inner side 340, for example an inner liner of the tyre 30. The tyre 30 may further comprise a first delimiter 353 defining a first border of the first balancing area 350 and a second delimiter 354 defining a second border of the first balancing area 350. The first balancing area 350, first delimiter 353 and second delimiter 354 may form a groove. The first delimiter 353 and second delimiter 354 may be formed during production of the tyre 30 or later, for example during processing of the tyre 30 according to an embodiment of the invention. If the first delimiter 353 and second delimiter 354 are formed during production of the tyre 30, they may be formed by a bladder forming the hollow of the tyre 30. Alternatively, they may be inserted into the tyre 30 and mounted to the inner side 340.

Fig. 3 b) shows a cross-sectional view of vehicle tyre 30 wherein the surface of the first balancing area 350 comprises the first nanostructure 352 as described with reference to Fig. 2 b). The first nanostructure 352 forms part of the inner side 340. If the first nanostructure 352 is formed during production of the tyre 30, it may be formed by a bladder forming the hollow of the tyre 30.
Alternatively, if the first nanostructure 352 is formed later, for example during processing of the tyre 30 according to an embodiment of the invention, it may be formed by processing, for example abrading or shaping, the inner side 340.

Fig. 3 c) shows a cross-sectional view of vehicle tyre 30 wherein the surface of the first balancing area 350 comprises the first nanostructure 352 as described with reference to Fig. 2 b). The first nanostructure 352 is formed on the inner side 340. The first nanostructure 352 may be provided by distributing, for example spraying and drying or hardening, a material, such as a varnish, comprising nanoparticles on the first balancing area 350.

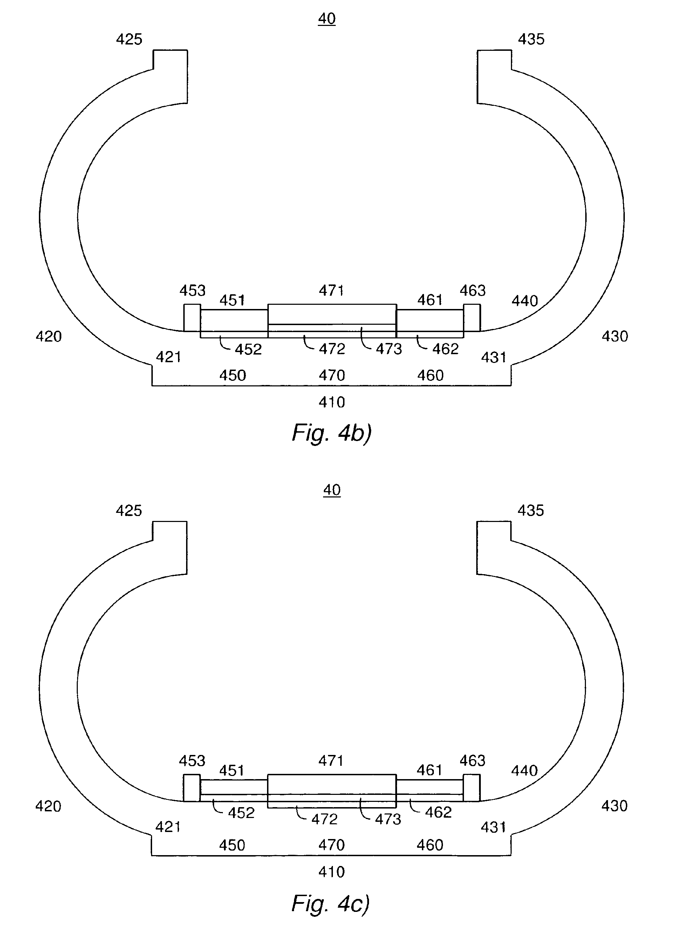

Fig. 4 shows, with reference to Figs 1 and 2, cross-sectional views of vehicle tyres 40 according to another embodiment of the invention.

Fig. 4 a) shows a cross-sectional view of vehicle tyre 40 comprising the first circumferential balancing area 450 comprising a first amount of the balancing substance 451, the second circumferential balancing area 460 comprising a second amount of the balancing substance 461, and a delimiter area 470 comprising a delimiter 471 between the first balancing area 450 and the first balancing area 450 on the inner side 440, for example an inner liner of the tyre 40. The delimiter 471 may be formed during production of the tyre 40 or later, for example during processing of the tyre 40 according to an embodiment of the invention. The delimiter 471 may be inserted into the tyre 40 and mounted to the inner side 440. The delimiter 471 may be provided as endless product and cut as needed, or provided in pre-cut form. The delimiter 470 may be made of cellular material, for example foam material, preferably porous foam material. The delimiter 471 may be adapted to reduce rolling noise of the tyre 40. The tyre 40 may further comprise the first delimiter 453 of the first balancing area 450 and the first delimiter 463 of the second balancing area 460.

Fig. 4 b) shows a cross-sectional view of vehicle tyre 40 wherein the delimiter area 470 may comprise a surface 472 that is activated, for example abraded, to mount the delimiter 471. The delimiter area 470 may further comprise an adhesive layer 473, for example gluing layer. The adhesive layer 473 may be formed on the tyre 40 or the delimiter 471. Alternatively, the delimiter 471 may be mounted to the tyre 40 by other suitable means. The surface of the first balancing area 450 may comprise the first nanostructure 452 and the surface of the second balancing area 460 may comprise the second nanostructure 462. The first and second nanostructures 452, 462 may form part of the inner side 440 as described with reference to Fig. 3 b).

Fig. 4 c) shows a cross-sectional view of vehicle tyre 40 wherein the delimiter area 470 may comprise the surface 472 or the adhesive layer 473 or both as described with reference to Fig. 4 b). The surface of the first balancing area 450 may comprise the first nanostructure 452 and the surface of the second balancing area 460 may comprise the second nanostructure 462. The first and second nanostructures 452, 462 may be formed on the inner side 440 as described with reference to Fig. 3 c).

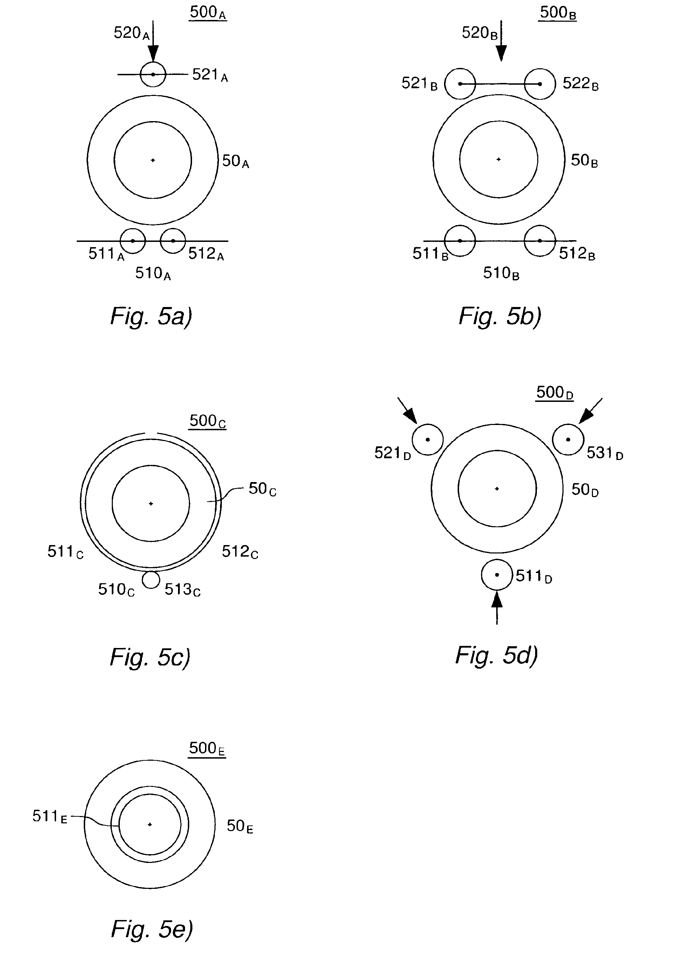

Fig. 5 shows various methods of mounting a vehicle tyre 50 according to an embodiment of the invention. The tyre 50 may be arranged vertically, horizontally or inclined by a certain angle.

Fig. 5 a) shows a method of mounting the tyre 50 using an apparatus 500a comprising a first portion 510a that may be stationary and a second portion 520a that may be movable. The first portion 510a may comprise a first bracket 511a and a second bracket 512a spaced apart from the first bracket 511a. The second portion 520a may comprise a third bracket 521a. For example, a bracket may be a cylinder, such as a roller. The tyre 50 may be mounted to the apparatus 500a by placing the tyre 50 in-between the first bracket 511a, second bracket 512a and third bracket 521a, and relatively moving the second portion 520a towards the first portion 510a. The first bracket 511a, second bracket 512a and third bracket 521a may grip, hold or span the outer surface, for example the tread surface, of the tyre 50. For processing the tyre 50, the tyre 50 may be rotated in the apparatus 500a, for example by rotating the rollers, or a tool may be moved relatively to the tyre 50 or both.

Fig. 5 b) shows a method of mounting the tyre 50 using an apparatus 500b comprising a first portion 510b that may be stationary and a second portion 520b that may be movable. The first portion 510b may comprise a first bracket 511b and a second bracket 512b spaced apart from the first bracket 511a as described with reference to Fig. 5 a). The second portion 520b may comprise a third bracket 521b and a fourth bracket 522b spaced apart from the third bracket 521b. The tyre 50 may be mounted to the apparatus 500b by placing the tyre 50 in-between the first bracket 511b, second bracket 512b, third bracket 521b and fourth bracket 522b, and relatively moving the second portion 520b towards the first portion 510b. The tyre 50 may be processed as described with reference to Fig. 5 a).

Fig. 5 c) shows a method of mounting the tyre 50 using an apparatus 500c comprising a portion 510c that may comprise a first bracket 511c and a second bracket 512c. For example, a bracket may be made of a belt, such as a textile belt, a foil, such as a metal foil, a sheet, such as a metal sheet, or a plate, such as a metal plate. The first portion 510c may further comprise a hinge rotatably coupling the first bracket 511c and the second bracket 512c. Alternatively, the first portion 510c may comprise a flexible ring, such as a belt or chain. The tyre 50 may be mounted to the apparatus 500c by placing the tyre 50 in-between the first bracket 511c and second bracket 512c, and relatively moving, for example closing, the second bracket 512c towards the first bracket 511c. The tyre 50 may be processed as described with reference to Fig. 5 a).

Fig. 5 d) shows a method of mounting the tyre 50 using an apparatus 500d comprising a first bracket 511d, a second bracket 521d, and a third bracket 531d as described with reference to Fig. 5 a). The tyre 50 may be mounted to the apparatus 500d by placing the tyre 50 in-between the first bracket 511d, second bracket 521d and third bracket 531d, and moving the first bracket 511d, second bracket 521d and third bracket 531d inwardly towards each other. The tyre 50 may be processed as described with reference to Fig. 5 a).

Fig. 5 e) shows a method of mounting the tyre 50 using an apparatus 500e comprising a bracket 511e. The tyre 50 may be mounted to the apparatus 500e by placing the tyre 50 on the bracket 511e. The bracket 511e may grip, hold, span or clamp a bead portion of the tyre 50. The tyre 50 may be processed as described with reference to Fig. 5 a).

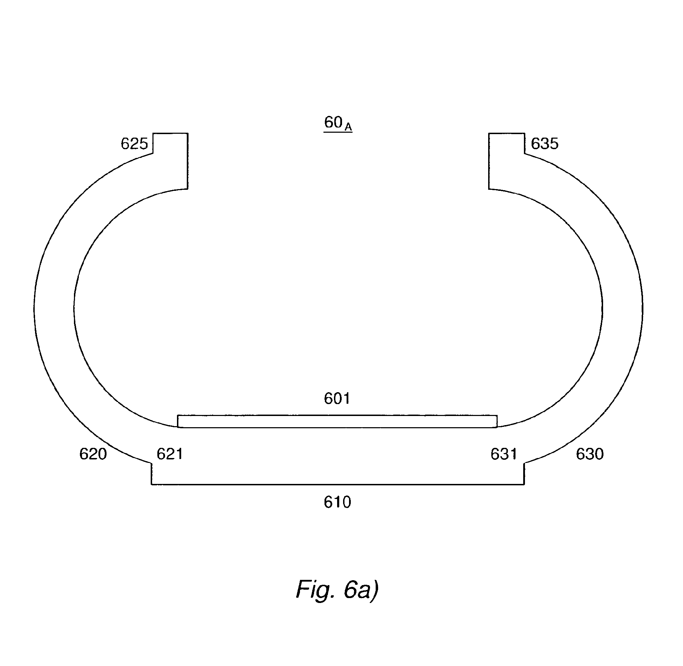

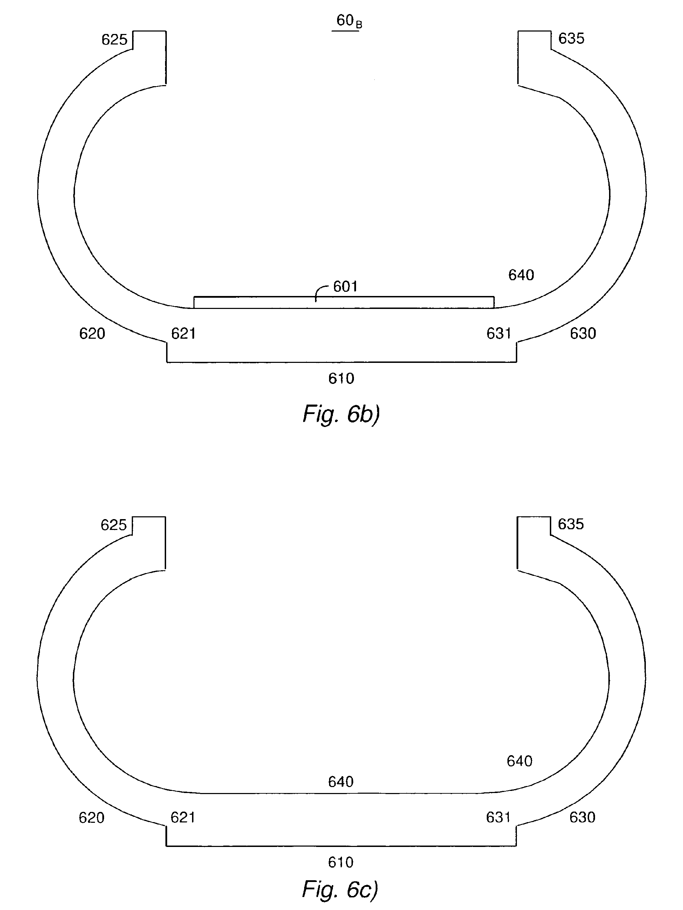

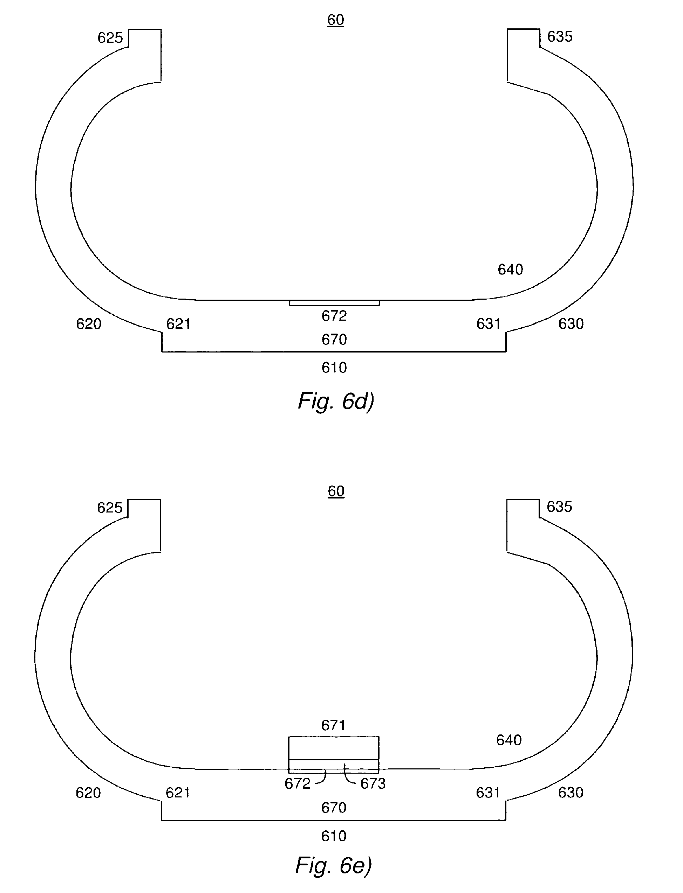

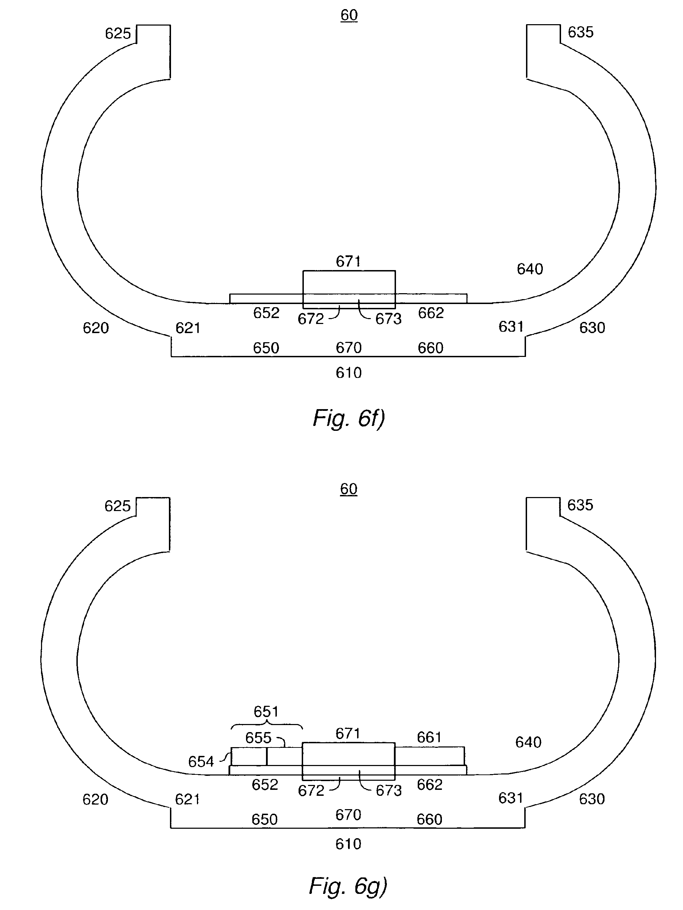

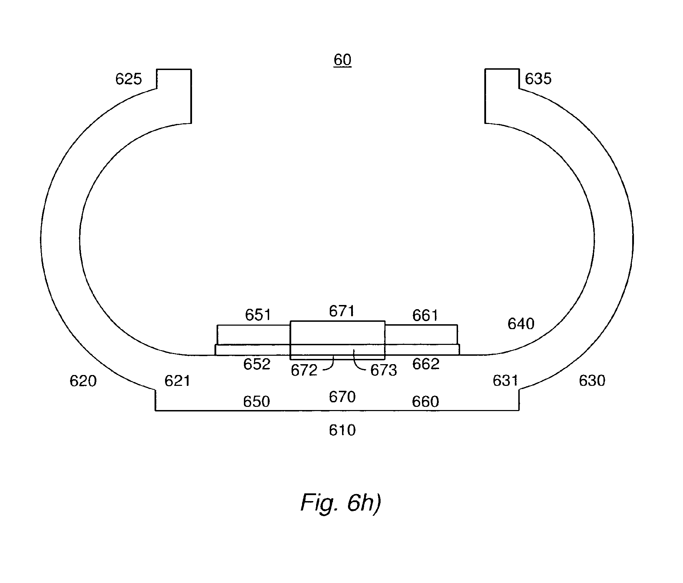

Fig. 6 shows a method of processing a vehicle tyre 60 and a thixotropic balancing substance according to an embodiment of the invention. The method is described in detail in a preferred order of steps. However, the steps and the order of steps may be varied with same or similar results. For example, a number of steps may be carried out simultaneously. Furthermore, steps may be optional.

Fig. 6 a) shows optionally mounting the tyre 60 to an apparatus for processing the tyre 60. Mounting the tyre 60 may comprise holding, for example gripping, clamping, holding or spanning, the outer side, for example the circumferential tread surface 610, of the tyre 60 or circumferential bead portions 625, 635 of the tyre 60 using, for example, brackets, cylinders or rollers as described with reference to Fig. 5.

Fig. 6 b) shows optionally opening out the bead portions 625, 635 of the tyre 60. Opening out the bead portions 625, 635 may be partial or complete with respect to a circumference of the bead portions 625, 635. Rollers may be inserted, preferably at a suitable angle, in-between the bead portions 625, 635 and pulled apart in opposite directions. Opening out may improve, for tools employed to process the tyre 60, accessibility to the inner side 640.

Fig. 6 c) shows optionally removing old balancing substance 601 from the tyre 60. The tyre may comprise old, possibly used, balancing substance 601, for example if the tyre 60 is a used tyre as may be the case in a repair shop. Removing old balancing substance 601 may comprise cleaning out, for example loosening, rinsing or suction cleaning, the old balancing substance 601.

Fig. 6 d) and e) show optionally inserting the delimiter 671 into the tyre 60, the delimiter 671 defining the first border of the first balancing area 650. The second balancing area 660 may be processed similarly or identically to, and preferably simultaneously with, the first balancing area 650.

As shown in Fig. 6 d) inserting the delimiter 671 may comprise pre-processing a delimiter area 670 on the inner side 640. Pre-processing the delimiter area 670 may comprise activating, for example abrading, a surface 672 of the delimiter area 670, cleaning, for example rinsing or suction cleaning, the delimiter area 670 to remove dust, liquids and the like, or both.

As shown in Fig. 6 e) inserting the delimiter 671 into the tyre 60 may comprise mounting the delimiter 671 on the delimiter area 670. The delimiter 671 may be provided as endless product and cut as needed, or provided in pre-cut form. The delimiter 670 may be made of cellular material, for example foam material, preferably porous foam material. The delimiter 671 may be adapted to reduce rolling noise of the tyre 60. The delimiter area 670 may further comprise an adhesive layer 673, for example gluing layer. The adhesive layer 673 may be formed on the tyre 60 or the delimiter 671. Alternatively, the delimiter 671 may be mounted to the tyre 60 by other suitable means. Mounting the delimiter 671 on the delimiter area 670 may comprise inserting the delimiter 671 into the tyre 60, fixing, for example gluing and drying or hardening, the delimiter 671 onto the delimiter area 670. For drying or hardening, heat, infrared (IR) light or the like may be used. Alternatively, the delimiter 671 or a groove for the balancing area 650 may be produced during production of tyre 60.

Fig. 6 f) shows optionally providing the first balancing area 650 with the first nanostructure 652. Providing the balancing area 650 with the first nanostructure 652 may comprise distributing, for example spraying and drying or hardening, a material, such as a varnish, comprising nanoparticles on the first balancing area 650. For drying or hardening, heat, infrared (IR) light or the like may be used. Alternatively, the first nanostructure 652 may be formed during production of the tyre 60 by a bladder forming the hollow of the tyre 60.

The method may further comprise providing the second balancing area 660 with the second nanostructure 662. The first nanostructure 652 and the second nanostructure 662 may be provided simultaneously.

Fig. 6 g) shows providing a first amount of the balancing substance 651 to the first circumferential balancing area 650 on the inner side 640 close to the first shoulder 621 of the tyre 60, comprising distributing the first amount of the balancing substance 651 on the first balancing area 650 substantially uniformly. Alternatively, the first balancing area 650 may be on the inner liner on the inner side 640. Providing the first amount of the balancing substance 651 may further comprise providing the first amount of the balancing substance 651 as a first strand 654 of balancing substance. Providing the first amount of the balancing substance 651 may further comprise also providing the first amount of the balancing substance 651 as a second strand 655 of balancing substance. A cross section of the first strand 654 of balancing substance or the second strand 655 of balancing substance or both may be circular, semicircular, flattened, triangular, quadrilateral or polygonal. The first strand 654 of balancing substance may be provided in parallel with the second strand 655 of balancing substance. Providing the first amount of the balancing substance 651 may further comprise determining the first amount of the balancing substance 651 from a characteristic of the tyre 60, for example a size, type or model of the tyre 60, or from a feature of the tyre 60, for example a code or bar code on the tyre, or an electronic identification or radio-frequency identification (RFID) on or in the tyre 60, or both. The apparatus may comprise a computing device possibly comprising a processor, memory, input/output device, such as a screen, a keyboard and possibly a RFID interface device. The computing device may analyse the characteristic, the feature or both, determine the first amount of the balancing substance 651 using, for example, suitable software and stored information, such as a look-up table, determine a discharge rate, and control a discharge device, such as a pump, to distribute the first amount of the balancing substance 651 on the first balancing area 650 substantially uniformly.

The method may further comprise providing the second amount of the balancing substance 661 to the second circumferential balancing area 660 on the inner side 640 close to the second shoulder 631 of the tyre 60. The first amount of the balancing substance 651 and the second amount of the balancing substance 661 may be provided simultaneously.

Fig. 6 h) shows optionally releasing the bead portions 625, 635 of the tyre 60.

The method may further comprise mounting the tyre 60 on a rim to form a vehicle wheel. The method may further comprise filling, that is pressurizing, the tyre 60 with gas or a mixture of gases, for example atmospheric air. The method may further comprise balancing the wheel, for example by spinning the wheel, preferably, under a load condition.

The method may utilize rotating the tyre 60 or moving a tool to process the tyre 60 or both. The method may intermittently employ multiple, for example two, tools to process intermittent segments of the tyre 60.

Embodiments of the inventions comprise a corresponding apparatus, that may carry out the method.

Embodiments of the inventions comprise a corresponding system, that may carry out the method, possibly across a number of devices.

Although specific embodiments have been illustrated and described herein, it will be appreciated by those of ordinary skill in the art, that any arrangement which is calculated to achieve the same purpose may be substituted for the specific embodiments shown. It is to be understood, that the above description is intended to be illustrative and not restrictive. This application is intended to cover any adaptations or variations of the invention. Combinations of the above embodiments and many other embodiments will be apparent to those of skill in the art upon reading and understanding the above description. The scope of the invention includes any other embodiments and applications in which the above structures and methods may be used. The scope of the invention should, therefore, be determined with reference to the appended claims along with the full scope of equivalents to which such claims are entitled.

## Claims

1. A method of processing a vehicle tyre (20; 30; 40; 60) and a thixotropic balancing substance, comprising:
providing a first amount of the balancing substance (251; 351; 451; 651) to a first circumferential balancing area (250; 350; 450; 650) on an inner side (240; 340; 440; 640) of the vehicle tyre (20; 30; 40; 60), comprising:
distributing the first amount of the balancing substance (251; 351; 451; 651) on the first balancing area (250; 350; 450; 650) substantially uniformly.

2. The method of claim 1, wherein providing the first amount of the balancing substance (251; 351; 451; 651) further comprises:
providing the first amount of the balancing substance (251; 351; 451; 651) as a first strand (654) of balancing substance.

3. The method of claim 1, wherein providing the first amount of the balancing substance (251; 351; 451; 651) further comprises:
providing the first amount of the balancing substance (251; 351; 451; 651) as a first strand (654) of balancing substance and a second strand (655) of balancing substance.

4. The method of claim 3, wherein the first strand (654) of balancing substance is provided intermittent with the second strand (655) of balancing substance.

5. The method of one of claims 2 to 4, wherein a cross section of the first strand (654) of balancing substance or the second strand (655) of balancing substance or both is circular, semicircular, flattened, triangular, quadrilateral or polygonal.

6. The method of one of claims 1 to 5, wherein providing the first amount of the balancing substance (251; 351; 451; 651) further comprises:
determining the first amount of the balancing substance (251; 351; 451; 651) from a characteristic of the tyre (20; 30; 40; 60), for example a size, type or model of the tyre (20; 30; 40; 60).

7. The method of one of claims 1 to 6, wherein providing the first amount of the balancing substance (251; 351; 451; 651) further comprises:
determining the first amount of the balancing substance (251; 351; 451; 651) from a feature of the tyre (20; 30; 40; 60), for example a code or bar code on the tyre, or an electronic identification or radio-frequency identification (RFID) on or in the tyre (20; 30; 40; 60).

8. The method of one of claims 1 to 7, further comprising:
mounting the tyre (20; 30; 40; 60) to process the tyre (20; 30; 40; 60).

9. The method of claim 8, mounting the tyre further comprises:
holding, for example gripping, spanning or clamping, an outer side, for example a circumferential tread surface (210; 310; 410; 610), of the tyre (20; 30; 40; 60) or circumferential bead portions (225, 236; 325, 335; 425, 435; 625, 635) of the tyre (20; 30; 40; 60).

10. The method of one of claims 1 to 9, further comprising:
opening out circumferential bead portions (225, 235; 325, 335; 425, 435; 625, 635) of the tyre (20; 30; 40; 60).

11. The method of claim 10, wherein opening out the bead portions (225, 235; 325, 335; 425, 435; 625, 635) is partial or complete.

12. The method of one of claims 1 to 11, further comprising:
removing old balancing substance (601) from the tyre (20; 30; 40; 60).

13. The method of claim 12, wherein removing old balancing substance (601) comprises:
cleaning out, for example loosening, rinsing or suction cleaning, the old balancing substance (601).

14. The method of one of claims 1 to 13, further comprising:
inserting a delimiter (471; 671) into the tyre (20; 30; 40; 60), the delimiter (471; 671) defining a first border of the first balancing area (250; 350; 450; 650).

15. The method of claim 14, wherein inserting the delimiter (471; 671) comprises:
pre-processing a delimiter area (470; 670) on the inner side (240; 340; 440; 640), and
mounting the delimiter (471; 671) on the delimiter area (470; 670).

16. The method of claim 15, wherein pre-processing the delimiter area (470; 670) comprises:
activating, for example abrading, the delimiter area (470; 670),
cleaning, for example rinsing or suction cleaning, the delimiter area (470; 670), or
both.

17. The method of claim 15 or 16, wherein mounting the delimiter (471; 671) on the delimiter area (470; 670) comprises:
inserting the delimiter (471; 671) into the tyre (20; 30; 40; 60),
fixing, for example gluing and drying or hardening, the delimiter (471; 671) onto the delimiter area (470; 670).

18. The method of one of claims 1 to 17, further comprising:
providing the first balancing area (250; 350; 450; 650) with a first nanostructure (252; 352; 452; 652).

19. The method of claim 18, wherein providing the balancing area (250; 350; 450; 650) with the first nanostructure (252; 352; 452; 652) comprises:
distributing, for example spraying and drying or hardening, a material, such as a varnish, comprising nanoparticles on the first balancing area (250; 350; 450; 650).

20. The method of one of claims 1 to 19, further comprising:
rotating the tyre (20; 30; 40; 60) or moving a tool to process the tyre (20; 30; 40; 60) or both.

21. The method of one of claims 1 to 20, wherein tools are intermittently employed to process intermittent segments of the tyre (20; 30; 40; 60).

22. The method of one of claims 1 to 21, further comprising:
mounting the tyre (20; 30; 40; 60) on a rim to form a vehicle wheel.

23. The method of claim 22, further comprising:
balancing the wheel, for example by spinning the wheel, preferably under a load condition.

24. The method of one of claim 1 to 23, wherein the first balancing area (250; 350; 450; 650) is on an inner liner on the inner side (240; 340; 440; 640).

25. The method of one of claim 1 to 23, wherein the first balancing area (250; 350; 450; 650) is on a first shoulder (221; 321; 421; 621) on the inner side (240; 340; 440; 640).

26. The method of claims 1 to 25, wherein a second balancing area (260; 360; 460; 660) is processed similarly or identically to, and preferably simultaneously with, the first balancing area (250; 350; 450; 650).

27. The method of claim 26, wherein the second balancing area (260; 360; 460; 660) is on a second shoulder (222; 322; 422; 622) on the inner side (240; 340; 440; 640).

28. An apparatus for processing a vehicle tyre (20; 30; 40; 60) according to the method of one of claims 1 to 27.

29. A system for processing a vehicle tyre (20; 30; 40; 60) according to the method of one of claims 1 to 27.
